(19) Europäisches Patentamt
European Patent Office
Office européen des brevets

(11) Publication number: 0 255 050 A2

# (12) EUROPEAN PATENT APPLICATION

(21) Application number: 87110687.8

(51) Int. Cl.⁴: H01B 7/28 , H01B 3/44

(22) Date of filing: 23.07.87

(30) Priority: 24.07.86 JP 174524/86

(43) Date of publication of application:
03.02.88 Bulletin 88/05

(84) Designated Contracting States:
DE GB SE

(71) Applicant: THE FURUKAWA ELECTRIC CO., LTD.
6-1, 2-chome, Marunouchi Chiyoda-ku
Tokyo(JP)

(72) Inventor: Muto, Hideji C-41
Furukawadenko-Daini-Ryo
3-2, Tatsumidaihigashi
Ichihara-shi Chiba-ken(JP)
Inventor: Kimura, Hitoshi
4-499-2, Kofudai
Ichihara-shi Chiba-ken(JP)
Inventor: Irie, Shin-ichi
5-39-1, Yoyogi§Shibuya-ku
Tokyo(JP)

(74) Representative: Hansen, Bernd, Dr.rer.nat. et al
Hoffmann, Eitle & Partner Patentanwälte
Arabellastrasse 4 Postfach 81 04 20
D-8000 München 81(DE)

## (54) Rubber or plastic insulated power cable.

(57) A rubber or plastic insulated power cable has a rubber or plastic insulation layer (3) on a conductor (1), wherein the insulation layer (3) comprises a crosslinked or noncrosslinked resin composition comprising a copolymer or ethylene and $CH_2=CR(COOH)$ (wherein R is H or $CH_3$) or a mixture of the copolymer and polyolefin, and a content of $-CH_2-CR(COOH)-$in the resin composition falls within a range of 0.1 to 20% by weight.

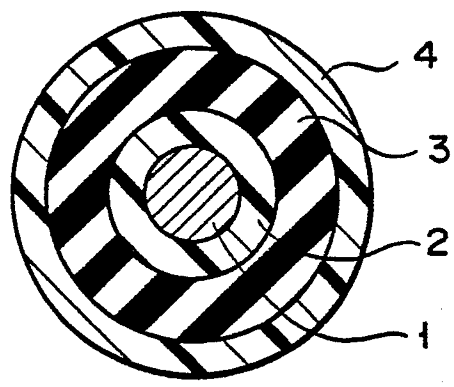


F I G. 2

EP 0 255 050 A2

Xerox Copy Centre

## Rubber or plastic insulated power cable

The present invention relates to a rubber or plastic insulated power cable in which water tree degradation is reduced.

A rubber or plastic insulated power cable has a basic structure obtained by sequentially forming conductor shield 2, insulation layer 3, insulation shield 4, metal shield 5, and jacket 6 on conductor 1, or a basic structure excluding conductor shield 2 from the above components (Fig. 1).

Polyolefin such as polyethylene or ethylene-propylene copolymer, crosslinked polyolefine prepared by a crosslinking agent such as an organic peroxide to improve heat resistance have been very popular as materials for the insulation layer. It is known that long-term electrical performance of power cables insulated with these polyolefin or crosslinked polyolefin is greatly degraded due to generation of water trees. A demand has recently arisen for developing cables having structures or materials for preventing generation of water trees. In order to prevent generation of water trees, (1) a steam curing method is replaced with a dry one to reduce the number of voids in the insulation layer since the voids cause a source for generating water trees; (2) triple extrusion of the conductor shield, the insulation layer, and the insulation shield is employed to micronize protrusion of the water tree source; and (3) a water impervious layer is formed on the cable core or under the jacket to prevent water permeation into the insulation layer.

A technique for providing a water tree degradation preventing function to the insulating material itself is also receiving a great deal of attention. For example, a certain type of additive is mixed in an insulating material.

However, the additive bleeds out to the outer surface of the insulation layer over a long period of time, and the effect of the additive cannot be kept for a long period of time.

In order to stabilize the water tree prevention capability for a long period of time, a polyolefin copolymer having a given polar group is proposed. For example, an ethylene-vinyl acetate copolymer (EVA) having a certain degree of water tree prevention capability is reported (Japanese Utility Model Publication No. 49-29008).

However, the EVA has poor thermal stability and is undesirably subjected to thermal decomposition by heat during extrusion or crosslinking. Therefore, demand has arisen for an improved polyolefin copolymer which can effectively utilizes an antibleeding property of the polyolefin copolymer, which tends not to be thermally decomposed, and which has a high water tree prevention capability.

The present invention has been made to find an insulating material used for insulation layer 3 (Fig. 1) so as to solve the above problem, having a high capacity for preventing degradation due to water trees and deeping this capacity for a long term. The present invention provides a rubber or plastic insulated power cable, wherein the insulation layer comprises a crosslinked or noncrosslinked resin composition comprising a copolymer of ethylene and $CH_2=CR(COOH)$ (wherein R is H or $CH_3$) or a mixture of the copolymer and polyolefin, and a content of $-CH_2-CR(COOH)-$in the resin composition falls within a range of 0.1 to 20% by weight.

This invention can be more fully understood from the following detailed description when taken in conjunction with the accompanying drawings, in which:

Fig. 1 is a sectional view showing a basic structure of a rubber or plastic insulated power cable; and

Fig. 2 is a sectional view of a model cable for evaluating properties of a power cable according to the present invention.

A copolymer of ethylene and $CH2=CR(COOH)$ used in the present invention is represented by the following molecular formula:

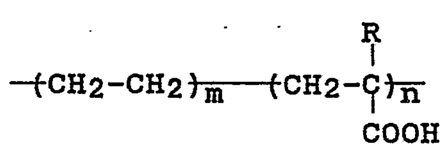

(R: H or $-CH_3$ group)

The content of $-CH_2-CR(COOH)-$in the crosslinked or noncrosslinked composition comprising the copolymer of ethylene and $CH_2=CR(COOH)$ or a mixture of the copolymer and polyolefin is represented in % by weight corresponding to the content of $-CH_2-CR(COOH)-$with respect to the total content of the composition.

In the resin composition for forming the insulation layer of the rubber or plastic insulated power cable of the present invention, the content of $-CH_2-CR(COOH)-$in the composition falls within the range of 0.1 to 20% by weight due to the following reasons. If the content is less than 0.1% by weight, the capacity for preventing degradation due to water trees is small. However, if the content exceeds 20% by weight, electrical characteristics such as tanδ and dielectric breakdown characteristics of the insulation layer formed by the resin composition are degraded. In addition, extrusion in the formation of the insulation layer is also degraded.

If balancing of the capacity for preventing degradation due to water trees, the electrical characteristics such as tanδ of the insulation layer and extrudability in the formation of the insulation layer is taken into consideration, the content of $-CH_2-CR(COOH)-$in the composition more preferably falls within the range of 0.5 of 10% by weight and most preferably the range of 0.5 to 5% by weight.

Examples of polyolefin mixed with the above copolymer are polyethylene, polypropylene, an ethylene-propylene copolymer, an ethylene-vinyl acetate copolymer, an ethylene-ethyl acrylate copolymer, and a mixture thereof. In particular, polyethylene and an ethylene-propylene copolymer are very effective.

When the content of $-CH_2-CR(COOH)-$in the resin composition which forms the insulation layer of a rubber or plastic insulated power cable according to the present invention is same, the mixture of the copolymer and polyolefin has a higher capacity for preventing degradation due to water trees than the copolymer only. The mechanism for this is not clear. However, it is assumed that water dispersion in only the copolymer differs from that in the mixture of the copolymer and polyolefin.

The resin composition for forming the insulation layer can be used in a noncrosslinked form. However, in order to improve heat resistance, a crosslinking agent such as an organic peroxide can be added to the resin composition, or an electron beam can be applied thereto, thereby to crosslink the resin composition. Furthermore, one or two additives such as an antioxidant and other agent may be added as needed. Examples of the crosslinking agent are dicumyl peroxide, tert-butylcumyl peroxide, and 1,3-bis-(tert-butylperoxyisopropyl)-benzene. Examples of the antioxidant are 4,4'-thiobis(3-methyl-6-tert-butylphenol) and bis[2-methyl-4-{3-n-alkyl($C_{12}$ or $C_{14}$)thiopropionyloxy}-5-tert-butylphenyl]sulfide. However, the crosslinking agent and the antioxidant are not limited to the above materials.

In the rubber or plastic insulated power cable of the present invention, a simple water impervious layer such as a metal-plastic laminate tape may be formed in consideration of its structure. In this case, the water impervious layer prevents external water permeation and degradation due to water trees. In addition, the micro bow-tie trees generated by the initial moisture of the cable can be prevented by the insulation, thereby providing a cable more capable of preventing against degradation due to water trees.

The cause of water trees in the cable insulation is assumed to be such that voids and foreign materials present in the insulation cause increased electrical stress and water is concentrated in the increasing portion of electrical stress.

The resin composition of the cable insulation layer according to the present invention has a capacity for preventing water trees for the following reason. The degree of water dispersion in the copolymer of ethylene and $CH_2=CR(COOH)$ is greater than that in polyethylene by the COOH group in $CH_2=CR(COOH)$ copolymerized with ethylene, and water is bonded to the copolymer itself in the form of a hydrogen bond. It is thus assumed that water movement is difficult, and water trees are not easily generated.

Examples 1 to 60 and Comparative Examples 1 to 2.

Examples of the present invention will be described with reference to the characteristic evaluation model cable shown in Fig. 2. The 0.5-mm thick conductor shield 2 was formed on each 2-mm diameter conductor 1. The 1-mm thick insulation layers 3 comprising crosslinked compositions (Tables 1 and 2) prepared by mixing a crosslinking agent and an antioxidant in

(i) ethylene-acrylic acid copolymers (Examples 1 to 9);

(ii) mixtures of an ethylene-acrylic acid copolymer and polyethylene (Examples 10 to 18);

(iii) mixtures of an ethylene-acrylic acid copolymer and an ethylene-propylene copolymer (Examples 19 to 27);

(iv) ethylene-methacrylic acid copolymers (Examples 31 to 39);

(v) mixtures of an ethylene-methacrylic acid copolymer and polyethylene (Examples 40 to 48); and

(vi) mixtures of an ethylene-methacrylic acid copolymer and an ethylene-propylene copolymer (Examples 49 to 57). were formed on the conductor shields 2. The 0.5-mm thick insulation shields 4 were respectively formed on the insulation layers 3 to prepare test model cables. Dicumyl peroxide was used as a crosslinking agent, and 4,4'-thiobis(3-methyl-6-tert-butylphenol) was used as the antioxidant. It should be

noted that noncrosslinked compositions without the above crosslinking agents were used in Examples 28 to 30 and in Examples 58 to 60 to form insulation layers 3 on corresponding conductor shields, thereby preparing model cables.

As Comparative Examples 1 and 2, a composition consisting of polyethylene, the crosslinking agent, and the antioxidant and a composition consisting of an ethylene-propylene copolymer, the crosslinking agent and the antioxidant were respectively used to form insulation layers 3.

The respective model cables were aged under a conditions (AC voltage: 2 kV, 1 kHz) underwater for 600 days, and measurements of tan$\delta$ were performed and the numbers of bow-tie trees of 2 cc volume of insulation layers were observed by a microscope (X100). Results are summarized in Tables 1 and 2.

Table 1

| | | | Examples 1 | 2 | 3 | 4 | 5 | 6 | 7 | 8 | 9 | 10 |
|---|---|---|---|---|---|---|---|---|---|---|---|---|
| $CH_2=CH(COOH)$ Content in Composition (wt%) | | | 20 | 10 | 7 | 5 | 4 | 2 | 1 | 0.5 | 0.1 | 20 |
| Components (parts by weight) | Low-Density Polyethylene (M.I.: 1 g/10 min; specific gravity: 0.92) | | | | | | | | | | | 60 |
| | Ethylene-Propylene copolymer (Mooney Viscosity $ML_{1+4}$(100°C) 20; density: 0.86 g/cm$^3$) | | | | | | | | | | | |
| | Content of Acrylic Acid in Ethylene-Acrylic Acid Copolymer | 50 wt% | | | | | | | | | | 40 |
| | | 20 wt% | 100 | | | | | | | | | |
| | | 10 wt% | | 100 | | | | | | | | |
| | | 7 wt% | | | 100 | | | | | | | |
| | | 5 wt% | | | | 100 | | | | | | |
| | | 4 wt% | | | | | 100 | | | | | |
| | | 2 wt% | | | | | | 100 | | | | |
| | | 1 wt% | | | | | | | 100 | | | |
| | | 0.5 wt% | | | | | | | | 100 | | |
| | | 0.1 wt% | | | | | | | | | 100 | |
| | Crosslinking Agent | | 2 | 2 | 2 | 2 | 2 | 2 | 2 | 2 | 2 | 2 |
| | Antioxidant | | 0.3 | 0.3 | 0.3 | 0.3 | 0.3 | 0.3 | 0.3 | 0.3 | 0.3 | 0.3 |
| Number of Bow-Tie Trees (trees/cc) | | | 0 | 0 | 0 | 0 | 0 | 7 | 20 | $1\times10^2$ | $5\times10^2$ | 0 |
| tan δ (%) | | | 0.050 | 0.044 | 0.035 | 0.031 | 0.030 | 0.028 | 0.025 | 0.020 | 0.019 | 0.048 |

Table 1

| | | | Examples | | | | | | | | | |
|---|---|---|---|---|---|---|---|---|---|---|---|---|
| | | | 11 | 12 | 13 | 14 | 15 | 16 | 17 | 18 | 19 | 20 |
| $CH_2$=CH(COOH) Content in Composition (wt%) | | | 10 | 7 | 5 | 4 | 2 | 1 | 0.5 | 0.1 | 20 | 10 |
| Components (parts by weight) | Low-Density Polyethylene (M.I.: 1 g/10 min; specific gravity: 0.92) | | 50 | 65 | 50 | 60 | 50 | 50 | 50 | 80 | | |
| | Ethylene-Propylene co-polymer (Mooney Viscosity $ML_{1+4}$(100°C) 20; density: 0.86 g/cm$^3$) | | | | | | | | | | 60 | 50 |
| | Content of Acrylic Acid in Ethylene-Acrylic Acid Copolymer | 50 wt% | | | | | | | | | 40 | |
| | | 20 wt% | 50 | 35 | | | | | | | | 50 |
| | | 10 wt% | | | 50 | 40 | | | | | | |
| | | 7 wt% | | | | | | | | | | |
| | | 5 wt% | | | | | | | | | | |
| | | 4 wt% | | | | | 50 | | | | | |
| | | 2 wt% | | | | | | 50 | | | | |
| | | 1 wt% | | | | | | | 50 | | | |
| | | 0.5 wt% | | | | | | | | 20 | | |
| | | 0.1 wt% | | | | | | | | | | |
| | | | | | | | | | | | | |
| | Crosslinking Agent | | 2 | 2 | 2 | 2 | 2 | 2 | 2 | 2 | 2 | 2 |
| | Antioxidant | | 0.3 | 0.3 | 0.3 | 0.3 | 0.3 | 0.3 | 0.3 | 0.3 | 0.3 | 0.3 |
| Number of Bow-Tie Trees (trees/cc) | | | 0 | 0 | 0 | 0 | 0 | 11 | 70 | $4\times10^2$ | 0 | 0 |
| tan δ (%) | | | 0.042 | 0.036 | 0.031 | 0.031 | 0.025 | 0.023 | 0.019 | 0.017 | 0.055 | 0.040 |

Table 1

| | | | Examples 21 | 22 | 23 | 24 | 25 | 26 | 27 | 28 | 29 | 30 |
|---|---|---|---|---|---|---|---|---|---|---|---|---|
| $CH_2$=CH(COOH) Content in Composition (wt%) | | | 7 | 5 | 4 | 2 | 1 | 0.5 | 0.1 | 2 | 2 | 2 |
| Components (parts by weight) | Low-Density Polyethylene (M.I.: 1 g/10 min; specific gravity: 0.92) | | | | | | | | | | 50 | |
| | Ethylene-Propylene co-polymer (Mooney Viscosity $ML_{1+4}$(100°C) 20; density: 0.86 g/cm$^3$) | | 65 | 50 | 60 | 50 | 50 | 50 | 80 | | | 50 |
| | Content of Acrylic Acid in Ethylene-Acrylic Acid Copolymer | 50 wt% | | | | | | | | | | |
| | | 20 wt% | 35 | | | | | | | | | |
| | | 10 wt% | | 50 | 40 | | | | | | | |
| | | 7 wt% | | | | | | | | | | |
| | | 5 wt% | | | | | | | | | | |
| | | 4 wt% | | | | 50 | | | | | 50 | 50 |
| | | 2 wt% | | | | | 50 | | | 100 | | |
| | | 1 wt% | | | | | | 50 | | | | |
| | | 0.5 wt% | | | | | | | 20 | | | |
| | | 0.1 wt% | | | | | | | | | | |
| | Crosslinking Agent | | 2 | 2 | 2 | 2 | 2 | 2 | 2 | 0 | 0 | 0 |
| | Antioxidant | | 0.3 | 0.3 | 0.3 | 0.3 | 0.3 | 0.3 | 0.3 | 0.3 | 0.3 | 0.3 |
| Number of Bow-Tie Trees (trees/cc) | | | 0 | 0 | 0 | 0 | 15 | 85 | 6x10$^2$ | 9 | 0 | 0 |
| tan δ (%) | | | 0.038 | 0.034 | 0.032 | 0.030 | 0.025 | 0.020 | 0.019 | 0.028 | 0.025 | 0.030 |

Table 1

| | | | Comparative Examples 1 | Comparative Examples 2 |
|---|---|---|---|---|
| $CH_2=CH(COOH)$ Content in Composition (wt%) | | | 0 | 0 |
| Components (parts by weight) | Low-Density Polyethylene (M.I.: 1 g/10 min; specific gravity: 0.92) | | 100 | |
| | Ethylene-Propylene copolymer (Mooney Viscosity $ML_{1+4}$(100°C) 20; density: 0.86 $g/cm^3$) | | | 100 |
| | Content of Acrylic Acid in Ethylene-Acrylic Acid Copolymer | 50 wt% | | |
| | | 20 wt% | | |
| | | 10 wt% | | |
| | | 7 wt% | | |
| | | 5 wt% | | |
| | | 4 wt% | | |
| | | 2 wt% | | |
| | | 1 wt% | | |
| | | 0.5 wt% | | |
| | | 0.1 wt% | | |
| | | | | |
| | Crosslinking Agent | | 2 | 2 |
| | Antioxidant | | 0.3 | 0.3 |
| Number of Bow-Tie Trees (trees/cc) | | | $1.1\times10^4$ | $3.0\times10^3$ |
| tan $\delta$ (%) | | | 0.015 | 0.016 |

Table 2

| | | Examples | | | | | | | | | |
|---|---|---|---|---|---|---|---|---|---|---|---|
| | | 31 | 32 | 33 | 34 | 35 | 36 | 37 | 38 | 39 | 40 |
| $CH_2=CCH_3(COOH)$ Content in Composition (wt%) | | 20 | 10 | 7 | 5 | 4 | 2 | 1 | 0.5 | 0.1 | 20 |
| Components (parts by weight) | Low-Density Polyethylene (M.I.: 1 g/10 min; specific gravity: 0.92) | | | | | | | | | | 60 |
| | Ethylene-Propylene co-polymer (Mooney Viscosity $ML_{1+4}$(100°C) 20; density: 0.86 $g/cm^3$) | | | | | | | | | | |
| | Content of Methacrylic Acid in Ethylene-Methacrylic Acid Copolymer: 50 wt% | | | | | | | | | | 40 |
| | 20 wt% | 100 | | | | | | | | | |
| | 10 wt% | | 100 | | | | | | | | |
| | 7 wt% | | | 100 | | | | | | | |
| | 5 wt% | | | | 100 | | | | | | |
| | 4 wt% | | | | | 100 | | | | | |
| | 2 wt% | | | | | | 100 | | | | |
| | 1 wt% | | | | | | | 100 | | | |
| | 0.5 wt% | | | | | | | | 100 | | |
| | 0.1 wt% | | | | | | | | | 100 | |
| | Crosslinking Agent | 2 | 2 | 2 | 2 | 2 | 2 | 2 | 2 | 2 | 2 |
| | Antioxidant | 0.3 | 0.3 | 0.3 | 0.3 | 0.3 | 0.3 | 0.3 | 0.3 | 0.3 | 0.3 |
| Number of Bow-Tie Trees (trees/cc) | | 0 | 0 | 0 | 0 | 0 | 9 | 33 | $1.5 \times 10^2$ | $5.5 \times 10^2$ | 0 |
| tan δ (%) | | 0.049 | 0.044 | 0.038 | 0.031 | 0.030 | 0.029 | 0.026 | 0.019 | 0.018 | 0.049 |

Table 2

| Components (parts by weight) | | | Examples 41 | 42 | 43 | 44 | 45 | 46 | 47 | 48 | 49 | 50 |
|---|---|---|---|---|---|---|---|---|---|---|---|---|
| $CH_2=CCH_3(COOH)$ Content in Composition (wt%) | | | 10 | 7 | 5 | 4 | 2 | 1 | 0.5 | 0.1 | 20 | 10 |
| Components (parts by weight) | Low-Density Polyethylene (M.I.: 1 g/10 min; specific gravity: 0.92) | | 50 | 65 | 50 | 60 | 50 | 50 | 50 | 80 | | |
| | Ethylene-Propylene co-polymer (Mooney Viscosity $ML_{1+4}$(100°C) 20; density: 0.86 $g/cm^3$) | | | | | | | | | | 60 | 50 |
| | Content of Methacrylic Acid in Ethylene-Methacrylic Acid Copolymer | 50 wt% | | | | | | | | | 40 | |
| | | 20 wt% | 50 | 35 | | | | | | | | 50 |
| | | 10 wt% | | | 50 | 40 | | | | | | |
| | | 7 wt% | | | | | | | | | | |
| | | 5 wt% | | | | | | | | | | |
| | | 4 wt% | | | | | 50 | | | | | |
| | | 2 wt% | | | | | | 50 | | | | |
| | | 1 wt% | | | | | | | 50 | | | |
| | | 0.5 wt% | | | | | | | | 20 | | |
| | | 0.1 wt% | | | | | | | | | | |
| | | | | | | | | | | | | |
| | Crosslinking Agent | | 2 | 2 | 2 | 2 | 2 | 2 | 2 | 2 | 2 | 2 |
| | Antioxidant | | 0.3 | 0.3 | 0.3 | 0.3 | 0.3 | 0.3 | 0.3 | 0.3 | 0.3 | 0.3 |
| Number of Bow-Tie Trees (trees/cc) | | | 0 | 0 | 0 | 0 | 0 | 20 | 92 | 3.1x $10^2$ | 0 | 0 |
| tan δ (%) | | | 0.042 | 0.035 | 0.030 | 0.030 | 0.024 | 0.023 | 0.019 | 0.016 | 0.056 | 0.045 |

Table 2

| | | | Examples | | | | | | | | | |
|---|---|---|---|---|---|---|---|---|---|---|---|---|
| | | | 51 | 52 | 53 | 54 | 55 | 56 | 57 | 58 | 59 | 60 |
| $CH_2=CCH_3(COOH)$ Content in Composition (wt%) | | | 7 | 5 | 4 | 2 | 1 | 0.5 | 0.1 | 2 | 2 | 2 |
| Components (parts by weight) | Low-Density Polyethylene (M.I.: 1 g/10 min; specific gravity: 0.92) | | | | | | | | | | 50 | |
| | Ethylene-Propylene copolymer (Mooney Viscosity $ML_{1+4}$(100°C) 20; density: 0.86 g/cm$^3$) | | 65 | 50 | 60 | 50 | 50 | 50 | 80 | | | 50 |
| | Content of Methacrylic Acid in Ethylene-Methacrylic Acid Copolymer | 50 wt% | | | | | | | | | | |
| | | 20 wt% | 35 | | | | | | | | | |
| | | 10 wt% | | 50 | 40 | | | | | | | |
| | | 7 wt% | | | | | | | | | | |
| | | 5 wt% | | | | | | | | | | |
| | | 4 wt% | | | | 50 | | | | | 50 | 50 |
| | | 2 wt% | | | | | 50 | | | 100 | | |
| | | 1 wt% | | | | | | 50 | | | | |
| | | 0.5 wt% | | | | | | | 20 | | | |
| | | 0.1 wt% | | | | | | | | | | |
| | | | | | | | | | | | | |
| | Crosslinking Agent | | 2 | 2 | 2 | 2 | 2 | 2 | 2 | 0 | 0 | 0 |
| | Antioxidant | | 0.3 | 0.3 | 0.3 | 0.3 | 0.3 | 0.3 | 0.3 | 0.3 | 0.3 | 0.3 |
| Number of Bow-Tie Trees (trees/cc) | | | 0 | 0 | 0 | 0 | 50 | $1.2\times 10^2$ | $3.7\times 10^2$ | 0 | 0 | 0 |
| tan δ (%) | | | 0.040 | 0.034 | 0.032 | 0.030 | 0.025 | 0.019 | 0.018 | 0.030 | 0.024 | 0.030 |

As is apparent from Tables 1 and 2, the rubber or plastic insulated power cables of the present invention have a high capacity for preventing degradation due to water trees in the insulation layers, and the capacity can be effective for a long period of time, thereby improving quality of rubber or plastic insulated power cables.

## Claims

1. A rubber or plastic insulated power cable having a rubber or plastic insulation layer (3) on a conductor (1), characterized in that the insulation layer (3) comprises a crosslinked or noncrosslinked resin composition comprising a copolymer of ethylene and $CH_2=CR(COOH)$ (wherein R is H or $CH_3$) or a mixture of the copolymer and polyolefin, and a content of $-CH_2-CR(COOH)-$in the resin composition falls within a range of 0.1 to 20% by weight.

2. A cable according to claim 1, characterized in that the crosslinked or noncrosslinked resin composition comprises a mixture of the copolymer of ethylene and $CH_2=CR(COOH)$ (wherein R is H or $CH_3$) and polyolefin.

3. A cable according to claim 1, characterized in that R in $CH_2=CR(COOH)$ is H.

4. A cable according to claim 1, characterized in that R in $CH_2=CR(COOH)$ is $CH_3$.

5. A cable according to claim 1, characterized in that a content of $-CH_2-CR(COOH)-$in the crosslinked or noncrosslinked resin composition falls within a range of 0.5 to 10% by weight.

6. A cable according to claim 1, characterized in that a content of $-CH_2-CR(COOH)-$in the crosslinked or noncrosslinked resin composition falls within a range of 0.5 to 5% by weight.

7. A cable according to claim 2, characterized in that the polyolefin mixed with the copolymer of ethylene and $CH_2=CR(COOH)$ (wherein R is H or $CH_3$) is at least one member selected from the group consisting of polyethylene, polypropylene, an ethylene-propylene copolymer, an ethylene-vinyl acetate copolymer, and an ethylene-ethyl acrylate copolymer.

8. A cable according to claim 2, characterized in that the polyolefin mixed with the copolymer of ethylene and $CH_2=CR(COOH)$ (wherein R is H or $CH_3$) is at least one member selected from the group consisting of polyethylene and an ethylene-propylene copolymer.

9. A cable according to claim 2, characterized in that the insulation layer (3) comprises a crosslinked composition of a mixture of the copolymer of ethylene and $CH_2=CR(COOH)$ (acrylic acid) and polyethylene, and a content of $-CH_2-CR(COOH)-$in the resin composition falls within a range of 0.5 to 5% by weight.

10. A cable according to claim 2, characterized in that the insulation layer (3) comprises a crosslinked composition of a mixture of the copolymer of ethylene and $CH_2=CCH_3(COOH)$ (methacrylic acid) and polyethylene, and a content of $-CH_2-CCH_3(COOH)-$in the resin composition falls within a range of 0,5 to 5% by weight.

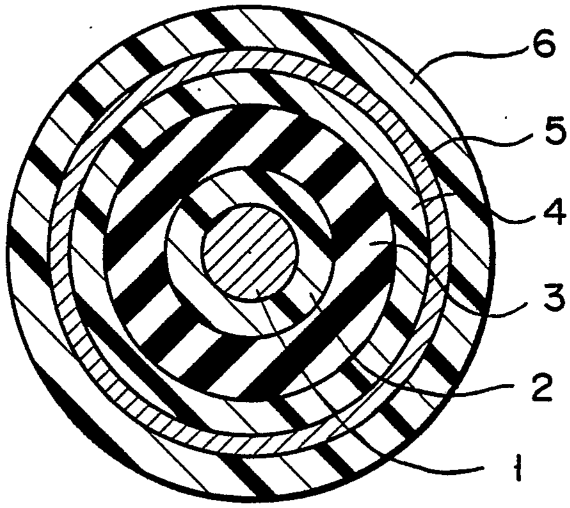


F I G. 1

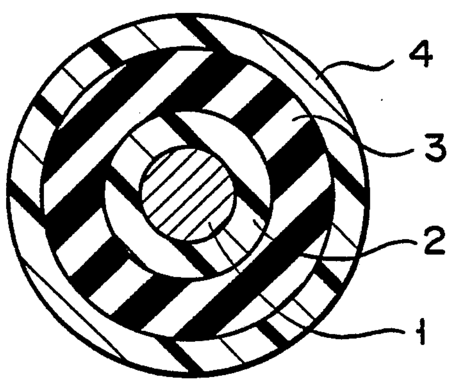


F I G. 2